Europäisches Patentamt

European Patent Office

Office européen des brevets

(11) Veröffentlichungsnummer: **0 451 369 A1**

# EUROPÄISCHE PATENTANMELDUNG

(21) Anmeldenummer: 90125809.5

(22) Anmeldetag: 29.12.90

(51) Int. Cl.5: **B60R 16/02**

(30) Priorität: 28.03.90 DE 4009899

(43) Veröffentlichungstag der Anmeldung:
16.10.91 Patentblatt 91/42

(84) Benannte Vertragsstaaten:
AT DE ES FR GB IT SE

(71) Anmelder: **Blaupunkt-Werke GmbH**
**Robert-Bosch-Strasse 200**
**W-3200 Hildesheim(DE)**

(72) Erfinder: **Attig, Joachim**
**Theodor-Storm-Strasse 29**
**W-3200 Hildesheim(DE)**

Erfinder: **Duckeck, Hans**
**Trockener Kamp 23**
**W-3200 Hildesheim(DE)**
Erfinder: **Becker, Hubert**
**Meisenwinkel 35**
**W-3200 Hildesheim(DE)**
Erfinder: **Eilers, Norbert**
**Seebothstrasse 19**
**W-3200 Hildesheim(DE)**

(74) Vertreter: **Eilers, Norbert, Dipl.-Phys.**
**Blaupunkt-Werke GmbH, Patente und**
**Lizenzen, Robert-Bosch-Strasse 200**
**W-3200 Hildesheim(DE)**

(54) Kraftfahrzeugkommunikationszentrale.

(57) Es wird eine neue Kraftfahrzeugkommunikationszentrale für den gemeinsamen Betrieb eines Autotelefons und eines Autoradios (7) mit weiteren Anschlüssen für im Kraftfahrzeuginnenraum wirksam werdenden Geräten beschrieben. Beim Empfang eines Telefonanrufs werden die übrigen an die Zentrale angeschlossenen Geräte durch den Gabelumschalter (11) akustisch unwirksam geschaltet.

Fig. 1

EP 0 451 369 A1

Gegenstand des Schutzrechtes ist eine neue Kraftfahrzeugkommunikationszentrale für den gemeinsamen Betrieb eines Autotelefons und eines Autoradios mit weiteren Anschlüssen für im Kfz-Innenraum wirksam werdenden Geräten.

In der älteren deutschen Patentanmeldung P 39 27 759 ist ein Cityrufempfänger beschrieben, dessen Tonrufgeneratorausgang über eine Oderstufe an den Eingang des NF-Verstärkers eines Autoradios angeschlossen ist, während die Eingangsstufen beider Geräte ohne Umschalter an dieselbe Autoradioantenne angekoppelt sind. Dadurch überlagert sich ein eingehender Tonruf des Cityrufempfängers dem empfangenen Radioprogramm und wird neben diesem hörbar.

Da nicht jeder Autofahrer das Bedürfnis hat, ständig Radiosendungen zu hören, aber auf die Kenntnisnahme eines Cityrufs nicht verzichten will, ist gemäß einer Weiterbildung in der genannten Patentanmeldung vorgeschlagen, in den Fußpunkt des Lautstärkereglers des gemeinsamen NF-Verstärkers einen Widerstand einzufügen, der beim Empfang einer Radiosendung überbrückt ist. Beim Empfang eines Eingangssignals aus dem Cityrufdecoder wird die Überbrückung aufgehoben, so daß der Cityruf auch dann hörbar wird, wenn die Lautstärke für die Wiedergabe des Autoradioprogramms stummgeregelt ist.

Diese Steuerung kann man als den Kern einer Kraftfahrzeugkommunikationszentrale ansehen, weil sie zwei verschiedene im Kraftfahrzeug mitgeführte Kommunikationsgeräte bei ihrer Steuerung in einer Abhängigkeit voneinander steuert.

Sind in einer anderen Gerätekombination ein Autotelefon und ein Autoradio an eine Kraftfahrzeugkommunikationszentrale angeschlossen, dann würde es nützlich sein, wenn die genannte Steuerung auch während des Empfangs des Rufzeichens für das Autotelefon bestehen würde, bei Annahme des Rufs würde die Aufrechterhaltung dieser Schaltung jedoch nachteilig sein, weil die empfangene Telefonsprachsignale durch die Signale der Radiosendung gestört wären.

Der Weiterbildung der bekannten Steuerung lag die Aufgabenstellung zugrunde, die Störung von empfangenen Telefonsprachsignalen in einem Kraftfahrzeug so weit als möglich zu unterbinden.

Diese Aufgabe wird durch eine Kraftfahrzeugkommunikationszentrale mit den Merkmalen des Anspruchs 1 gelöst.

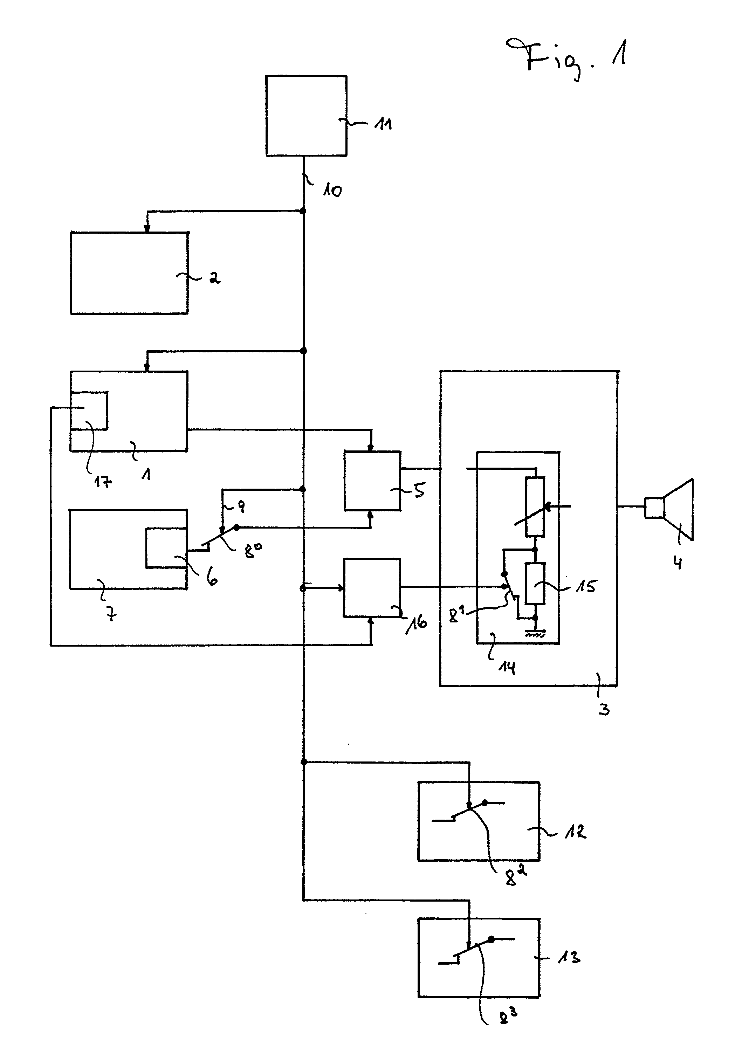

Anhand eines in Figur 1 dargestellten Blockschaltbildes ist die erfindungsgemäße Kraftfahrzeugkommunikationszentrale näher erläutert.

Die Kraftfahrzeugkommunikationszentrale greift in die Steuerung aller im Kraftfahrzeuginneren akustisch wirksamen Geräte ein. In dem Blockschaltbild des Ausführungsbeispiels sind als solche ein Autotelefon, ein Autoradio und ein Ventilator dargestellt.

Das Autotelefon umfaßt einen Empfangsteil 1 und einen Sendeteil 2. Dem Empfangsteil 1 ist ein Niederfrequenzverstärker 3 nachgeschaltet, an dem ein Lautsprecher 4 angeschlossen ist. Im Eingang des nachgeschalteten Niederfrequenzverstärkers liegt eine Oderstufe 5, der auch die Ausgangssignale des Demodulators 6 eines Autoradios 7 zugeführt sind. Somit können sich die niederfrequenten Signale des Autotelefons und des Autoradios im Niederfrequenzverstärker überlagern.

Im Ausgang des Demodulators 6 liegt ein gesteuerter Ruheschalter $8^0$. Der Steuereingang 9 des Ruheschalters $8^0$ ist mit einem Steuerausgang 10 des Gabelumschalters 11 des Autotelefons verbunden, der beim Abheben des Hörers geschaltet wird.

Zugleich sind an dem Steuerausgang des Gabelumschalters 11 die Steuereingänge weiterer Ruheschalter $8^n$ angeschlossen, die in die Schaltkreise weiterer Geräte integriert sind, welche im Kraftfahrzeuginneren akustisch wirksam werden können, z. B. ein Ventilator 12 oder aber auch eine Sprachbefehlssteuerung 13. Die Steuerung der Ruheschalter durch den Gabelumschalter ist derart ausgelegt, daß alle Ruheschalter bei Abnehmen des Hörers des Autotelefons von seiner Gabel geöffnet werden. Damit werden alle Störgeräuschquellen im Augenblick des Abhebens ausgeschaltet und erst beim Auflegen des Hörers wieder eingeschaltet.

Der Lautstärkeregler 14 im NF-Verstärker 3 besitzt einen Fußpunktwiderstand 15, der von einem gesteuerten Ruheschalter $8^1$ überbrückbar ist. Der Steuereingang 16 dieses gesteuerten Ruheschalters ist einerseits ebenfalls mit dem Steuerausgang des Gabelumschalters 11 verbunden, andererseits mit dem Steuereingang des Weckers 17 des Autotelefons.

Sobald durch einen Anruf der "Wecker" des Autotelefons eingeschaltet wird, wird das Ausgangssignal des Wecktongenerators auf den Lautsprecher des Autotelefons gegeben. Zugleich wird die Überbrückung des Fußpunktwiderstandes durch den Ruheschalter $8^1$ aufgehoben, wodurch die Wiedergabelautstärke des Lautsprechers ansteigt.

Wird nun der Hörer des Autotelefons von der Gabel abgenommen, dann hält das Ausgangssignal des Gabelschalters 11 den überbrückenden Ruheschalter $8^1$ weiter offen, bis der Hörer wieder aufgelegt wird und die ursprüngliche Lautstärke der Autoradiowiedergabe eingeschaltet wird.

**Patentansprüche**

1. Kraftfahrzeugkommunikationszentrale für den gemeinsamen Betrieb eines Autotelefons und eines Autoradios in einem Kraftfahrzeug mit weiteren Anschlüssen für im Kraftfahrzeuginnenraum wirksam werdenden Geräte,
dadurch gekennzeichnet,
daß beim Empfang eines Telefonanrufs die
übrigen angeschlossenen Geräte durch den
Gabelumschalter (11) akustisch unwirksam geschaltet werden.

2. Kraftfahrzeugkommunikationszentrale nach Anspruch 1,
dadurch gekennzeichnet,
daß das Autotelefon und das Autoradio über
eine Oderstufe (5) an einen gemeinsamen NF-
Verstärker (3) angeschlossen sind und im Ausgang des Autoradios (7) ein vom Gabelumschalter (11) gesteuerter Ruheschalter (8) angeordnet ist.

3. Kraftfahrzeugkommunikationszentrale nach Anspruch 2,
dadurch gekennzeichnet,
daß der Lautstärkeregler im NF-Verstärker einen von einem Ruheschalter (8) überbrückten
Fußpunktwiderstand (15) umfaßt und der Ruheschalter sowohl durch ein Eingangssignal für
den Wecker (17) des Autotelefons als auch
vom Gabelumschalter (11) her offengehalten
wird.

Fig. 1

**Europäisches Patentamt**

# EUROPÄISCHER RECHERCHENBERICHT

Nummer der Anmeldung

**EP 90 12 5809**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 056 587 (NISSAN)<br>* Seite 1, Zeile 11 - Seite 2, Zeile 24 ** Seite 3, Zeile 4 - Seite 4, Zeile 19 @ Seite 6, Zeile 19 - Seite 11, Zeile 24 @ Seite 17, Zeile 7 - Seite 18, Zeile 15; Ansprüche 1-5, 12; Figuren 1-6 *<br><br>– – – | 1 | B 60 R 16/02 |
| Y,A | EP-A-0 121 508 (PERSSON)<br>* Seite 1, Zeile 1 - Seite 2, Zeile 28 ** Seite 3, Zeile 1 - Seite 5, Zeile 17; Ansprüche 1, 4-6, 10; Figur 1 *<br><br>– – – | 1,2,3 | |
| A | ERICSSON REVIEW. vol. 64, no. 3, 1987, STOCKHOLM SE Seiten 141 - 150; JISMALM AND RYDBECK: "ERICSSON TELEPHONES FOR CELLULAR SYSTEMS"<br>* Seite 144, Spalte 1, Zeile 19 - Seite 147, Spalte 2, Zeile 48; Figuren 6, 7 *<br><br>– – – – – | 1,3 | |

| RECHERCHIERTE SACHGEBIETE (Int. Cl.5) |
|---|
| B 60 R<br>H 04 M<br>G 10 L<br>H 04 Q |

Der vorliegende Recherchenbericht wurde für alle Patentansprüche erstellt

| Recherchenort | Abschlußdatum der Recherche | Prüfer |
|---|---|---|
| Den Haag | 24 Juli 91 | GEYER J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-----------------------------------------------------------------------

& : Mitglied der gleichen Patentfamilie, übereinstimmendes Dokument